# EUROPÄISCHE PATENTSCHRIFT

(11) **EP 3 559 410 B1**
(45) Veröffentlichungstag und Bekanntmachung des Hinweises auf die Patenterteilung: **27.04.2022**
(21) Anmeldenummer: 17823136.1
(22) Anmeldetag: 21.12.2017
(51) Int. Cl.: E21B 47/09, E21B 47/12, G01V 3/26, B64C 39/02, E21B 47/022

(54) **ORTEN EINES BOHRKOPFS EINER ERDBOHRVORRICHTUNG**
LOCATING A DRILL HEAD OF A GROUND DRILLING DEVICE
LOCALISATION D'UNE TÊTE DE FORAGE D'UN ENGIN DE FORAGE DU SOL

(30) Priorität: 21.12.2016 DE 102016015194
(43) Veröffentlichungstag der Anmeldung: 30.10.2019
(73) Patentinhaber: TRACTO-TECHNIK GmbH & Co. KG, 57356 Lennestadt (DE)
(72) Erfinder: FISCHER, Sebastian, 57368 Lennestadt (DE)
(74) Vertreter: König, Gregor Sebastian
(86) Internationale Anmeldenummer: PCT/EP2017/084187
(87) Internationale Veröffentlichungsnummer: WO 2018/115334

(56) Entgegenhaltungen:
- US-A1- 2014 236 390
- US-A1- 2016 018 551

## Beschreibung

Die Erfindung betrifft eine Einrichtung und ein Verfahren zum Orten eines Bohrkopfs einer Erdbohrvorrichtung, ein System umfassend die Einrichtung sowie eine Verwendung beim Orten eines Bohrkopfs einer Erdbohrvorrichtung.

Bei einer Erdbohrvorrichtung wird ein Bohrkopf in das Erdreich eingebracht, um eine Erdbohrung zu erstellen. Das Einbringen der Erdbohrung kann zwar gesteuert über die Parameter der Neigung und des Vortriebs des Bohrkopfs erfolgen, aber insbesondere durch im Erdreich vorhandene Hindernisse kann es zu einer Ablenkung des Bohrkopfs kommen. Es ist daher wünschenswert, den Bohrkopf während des Einbringens der Erdbohrung zu orten, um den aktuellen Verlauf der Erdbohrung zu ermitteln. Es kann eine Richtungskontrolle des Bohrkopfs vorgenommen werden.

Zum Zwecke des Ortens des Bohrkopfs kann im Bereich des Bohrkopfs ein Sender angeordnet sein, der mittels eines oder mehrerer Empfänger detektiert werden kann. Beispielsweise kann der Sender elektromagnetische Wellen abstrahlen, die ein oder mehrere Empfänger erkennen können. Es kann vorgesehen sein, dass ein Empfänger als sogenannter Walk-Over-Empfänger relativ zum Sender bewegt werden kann. Hierbei bewegt ein Anwender den Walk-Over-Empfänger über dem Erdreich, in das die Erdbohrung eingebracht wird, und am Walk-Over-Empfänger wird in Abhängigkeit von der Lage des Walk-Over-Empfängers zum Sender ein Signal erhalten, so dass der Anwender, der mit dem Empfänger über dem Erdboden läuft, den Ort des Senders ermitteln kann. Es können aber auch ein oder mehrere stationäre Empfänger vorgesehen sein, die für die Messung stationär sind und am Bohrgerät oder an beliebiger Stelle angeordnet sein können, wobei die relative Position zum Bohrgerät und die Soll-Position des Bohrkopfs jeweils bekannt ist. Um die maximale Reichweite eines Empfängers zu bestimmen und diese zu vergrößern, können verschiedene Positionen eingemessen werden; der Empfänger wird dann beim Messen auf die jeweils nächste Position versetzt. Es kann aber auch vorgesehen sein, verschiedene Punkte in einer Folge zu messen, so dass mehrere Sender, etwa ein Sender am Bohrkopf oder ein Sender am Bohrgerät, eingesetzt werden. Dabei kann der Empfänger als Walk-Over-Empfänger verwendet werden, wobei durch die Vermessung zweier Punkte dennoch eine absolute Vermessung in einem von den Sendern gebildeten Koordinatensystem möglich ist. Es hat sich gezeigt, dass die Ortung des Bohrkopfs relativ aufwendig ist, wobei das Signal mehrerer Empfänger verwendet wird, und/oder eine Person nur mit der Aufgabe gebunden ist, den Bohrkopf zu orten. Eine solche aufwändige Einrichtung ist zum Beispiel aus der US 2016/018551 A1 bekannt.

Der Erfindung lag daher die Aufgabe zugrunde, eine verbesserte Einrichtung und ein verbessertes Verfahren zum Orten eines Bohrkopfs einer Erdbohrvorrichtung und eine verbesserte Verwendung beim Orten eines Bohrkopfs einer Erdbohrvorrichtung zu schaffen, welche bzw. welches eine schnellere Ortung des Bohrkopfs einer Erdbohrvorrichtung bei guter Erfassung des Bohrkopfs eröffnet.

Die Aufgabe wird durch die Gegenstände der nebengeordneten Patentansprüche gelöst. Vorteilhafte Weiterbildungen der Gegenstände der nebengeordneten Patentansprüche sind Gegenstand der jeweiligen abhängigen Patentansprüche und ergeben sich aus der nachfolgenden Beschreibung.

Kerngedanke der Erfindung ist es, die zum Orten des Bohrkopfs verwendete Sonde an oder in einem fliegenden Objekt anzuordnen. Hierdurch kann u.a. eine höhere Geschwindigkeit der über das Erdreich geführten Sonde erreicht werden. Auch ist es möglich, bei einem schlecht begehbaren Untergrund, wie beispielsweise Moor, Morast und/oder Wasser, eine Sonde schnell über diesen Untergrund zu bewegen. Die Erfindung hat zudem erkannt, dass mittels einer an oder in einem fliegenden Objekt angeordneten Sonde eine Unabhängigkeit gegenüber den Bodenverhältnissen erreicht wird, die oberhalb des Erdreichs, in das die Erdbohrung eingebracht wird, vorliegen.

Die Erfindung schafft eine Einrichtung zum Orten eines Bohrkopfs einer Erdbohrvorrichtung. Die Einrichtung umfasst eine kabellose Sonde und die Sonde ist an oder in einem fliegenden Objekt angeordnet.

Der Begriff "Sonde" im Sinne der Beschreibung umfasst eine Vorrichtung oder ein Gerät, insbesondere ein Messgerät bzw. eine Messsonde. Die Sonde kann insbesondere als Empfänger für ein Signal dienen, um einen Sender, der das Signal sendet, zu orten. Der Sender kann im Bereich des Bohrkopfs oder an diesem angeordnet sein. Sofern auf ein Orten des Bohrkopfs der Erdbohrvorrichtung an sich abgestellt wird, so umfasst dieses nicht nur die Bohrkopffront oder den Mittelpunkt des Bohrkopfs, sondern auch ein Orten des Bohrstrangs in der Nähe des Bohrkopfs. Der Ort des Senders oder des durch die Sonde zu erfassenden bzw. zu detektierenden Elements am Bohrstrang kann den Bereich festlegen, der von der Sonde geortet wird. Eine Anordnung eines Senders oder eines von der Sonde zu erfassenden Elements kann im Bereich des Bohrkopfs oder einem dem Bohrkopf folgenden Abschnitt des Bohrstrangs angeordnet sein. Hierzu kann eine Aufnahme für einen Sender vorgesehen sein. Ganz besonders bevorzugt kann ein Sender in einem unmittelbar hinter dem Bohrkopf im Bohrstrang folgenden Abschnitt oder am Bohrkopf selbst vorgesehen sein. Der Sender kann auch in einem dem Bohrkopf folgenden Abschnitt vorgesehen sein.

Der Begriff "Erdbohrvorrichtung" umfasst jedwede Vorrichtung, welche ein insbesondere Bohrgestängeschüsse aufweisendes Bohrgestänge in einem bestehenden oder zu erstellenden Kanal im Erdreich bewegt, um eine Erdbohrung, insbesondere ein Horizontalbohrung (HD), zu erstellen oder aufzuweiten oder/und um Leitungen oder andere lange Körper in das Erdreich einzuziehen. Bei der Erdbohrvorrichtung kann es sich insbesondere um eine HD-Vorrichtung handeln. Eine Erdbohrvorrichtung kann insbesondere Erdreich verdrängend arbeiten. Mittels der Erdbohrvorrichtung kann das Bohrgestänge rotatorisch und/oder translatorisch in längsaxialer Richtung des Bohrgestänges in das Erdreich eingebracht werden.

Der Begriff "HD" (horizontal drilling, Horizontalbohrung) im Sinne der Beschreibung umfasst insbesondere jede Art von bestehenden oder zu erstellenden, vorzugsweise horizontalen Kanälen in einem Körper, insbesondere Erdkanäle einschließlich Erdbohrungen, Felsbohrungen oder Erdleitungen sowie unterirdische oder oberirdische Rohrleitungen und Wasserkanäle, die sich durch Einsatz einer entsprechenden Erdbohrvorrichtung herstellen oder einziehen lassen.

Der Begriff "fliegendes Objekt" im Sinne der Beschreibung umfasst ein Luftfahrzeug, insbesondere ein unbemanntes Luftfahrzeug. Bei dem fliegenden Objekt kann es sich beispielsweise um ein unbemanntes Flugmodell, insbesondere in Form einer kollisionstoleranten bzw. kollisionssicheren Drohne handeln. Das fliegende Objekt kann einen oder mehrere Abstandssensoren aufweisen, mit denen ein autarkes Fliegen ermöglicht wird, ohne zu kollidieren. Das fliegende Objekt kann insbesondere einen Akkumulator bzw. eine aufladbare Batterie aufweisen. Das fliegende Objekt kann autark durch einen Computer oder vom Boden über eine Fernsteuerung betrieben und navigiert werden. Beispielsweise kann das fliegende Objekt ein Flugzeug oder insbesondere ein nach Art eines Helikopters startendes und landendes fliegendes Objekt sein. Insbesondere ist das fliegende Objekt bevorzugt ein Multicopter, insbesondere ein Quadrocopter.

In einer bevorzugten Ausführungsform kann das fliegende Objekt der Bewegung des Bohrkopfs folgen. Hat die Sonde den Bohrkopf geortet, so kann die Sonde über dem Bohrkopf bei der Erstellung der Erdbohrung verbleiben.

In einer bevorzugten Ausführungsform wird die Einrichtung mittels eines Programms angesteuert, das in einem Speicher der Einrichtung abgelegt ist, und derart angepasst ist, dass das fliegende Objekt in einem vorbestimmten Muster fliegt. Hierdurch kann ein Bohrkopf in einem größeren Bereich geortet werden; der Bereich unterhalb der Oberfläche kann systematisch abgesucht werden. Das Muster kann derart ausgestaltet sein, dass ein zeilenförmiges Abrastern oder Abscannen eines, insbesondere rechteckförmigen Bereichs, möglich ist. Das Muster kann hierzu eine geradlinige Bewegung in einer ersten Richtung umfassen, an die sich eine geradlinige Bewegung quer zur ersten Richtung anschließt. Die Bewegung in der ersten Richtung kann länger sein als die unmittelbar daran anschließende Bewegung. Es kann auch oder alternativ vorgesehen sein, dass das Muster ein Zick-Zack-Muster umfasst. Es kann auch sein, dass das Muster nicht geradlinige Elemente enthält, insbesondere kann das Muster eine Form einer Spirale aufweisen. Durch die Verwendung eines Musters kann kann eine autarke Einrichtung geschaffen werden, die den Bohrkopf in einem Bereich "findet" und dann dem Bohrkopf "folgt".

Der Begriff "Einrichtung" im Sinne der Beschreibung umfasst das fliegende Objekt mit der Sonde. Zur Einrichtung kann eine Steuervorrichtung gehören, die in kabellosem Kontakt mit der Sonde und/oder dem fliegenden Objekt steht. Die Einrichtung kann ein Programm umfassen, das das von der Sonde empfangene Signal des Senders oder ein dem Signal des Senders zugeordnetes Signal auswerten bzw. aufzeichnen kann. Hierdurch kann der Fortgang der zu erstellenden Erdbohrung aufgezeichnet werden. Bei Abweichungen von der Soll-Lage der Erdbohrung kann in die Steuerung der Erdbohrvorrichtung in Abhängigkeit von dem Signal des Programms eingegriffen werden. Dieser Eingriff kann durch einen Anwender oder automatisch erfolgen. Dazu können das Programm und die Erdbohrvorrichtung miteinander gekoppelt sein. Insbesondere kann das Programm auf einem Computer, Mikrocontroller oder dergleichen der Erdbohrvorrichtung ausgeführt werden. Anhand der Daten des Programms kann die Erdbohrvorrichtung, beispielsweise mittels eines weiteren oder desselben Programms, derart ausgestaltet sein, in die Steuerung der Erdbohrung einzugreifen, um eine Korrektur und/oder Verbesserung des Erdbohrungsverlaufs durchzuführen.

In einer bevorzugten Ausführungsform ist ein Bereich an einer Eingabe eingebbar, wobei ein Bereich festgelegt wird, der von dem fliegenden Objekt überflogen wird. Die Eingabe kann als Tastatur, TouchPad, TrackBall, Maus oder sonstige bekannte Eingabevorrichtung, insbesondere in Verbindung mit einer Anzeigevorrichtung, die eine dem Bereich entsprechende visuelle Darstellung anzeigen kann, zur Eingabe von Koordinaten oder den Koordinaten entsprechenden Parametern ausgestaltet sein. Hierdurch kann dem fliegenden Objekt zunächst zum Suchen des Bohrkopfs eine Beschränkung auf einen bestimmten Bereich vorgegeben werden, in dem der Bohrkopf der Erdbohrvorrichtung vermutet wird. Die Schnelligkeit der Ermittlung des Ortes des Bohrkopfes kann beschleunigt werden.

Die Erfindung schafft auch ein System umfassend eine vorgenannte Einrichtung. Die Einrichtung umfasst ferner einen Bohrkopf oder einen dem Bohrkopf folgenden Abschnitt eines Bohrstrangs. In dem Bohrkopf bzw. dem Abschnitt ist eine Aufnahme für einen Sender ausgestaltet. Hierdurch kann ein System geschaffen werden, bei dem ein Sender auf die Sonde abgestimmt sein und dazu verwendet werden kann, den Bohrkopf bzw. den Abschnitt schneller zu orten. In einer bevorzugten Ausführungsform umfasst das System auch den Sender.

Die Erfindung schafft auch ein Verfahren zum Orten eines Bohrkopfs einer Erdbohrvorrichtung, wobei eine Sonde über das Erdreich geführt wird. Das Erdreich wird mittels eines fliegenden Objekts überflogen, wobei in oder an dem fliegenden Objekt die Sonde angeordnet ist. Der Begriff "über" im Sinne der Beschreibung umfasst dabei, dass die Sonde nicht auf dem Erdreich, sondern über diesem, nämlich in einem Abstand zu diesem, ohne einen direkten Kontakt geführt bzw. geflogen werden kann. Ausführungen zur Einrichtung zum Orten eines Bohrkopfs einer Erdbohrvorrichtung gelten für das Verfahren analog.

In einer bevorzugten Ausführungsform wird das Erdreich in einem vorbestimmten Muster von der Sonde überflogen.

In einer bevorzugten Ausführungsform wird ein Bereich eingegeben, der von dem fliegenden Objekt überflogen wird.

Die Erfindung schafft auch eine Verwendung beim Orten eines Bohrkopfs einer Erdbohrvorrichtung, bei der eine kabellose Sonde zum Orten des Bohrkopfs verwendet wird. Es wird ein fliegendes Objekt verwendet, in oder an dem die Sonde angeordnet ist. Ausführungen zur Einrichtung zum Orten eines Bohrkopfs einer Erdbohrvorrichtung und zum Verfahren zum Orten eines Bohrkopfs einer Erdbohrvorrichtung gelten für die Verwendung analog.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird nachfolgend anhand von in der Zeichnung dargestellten Ausführungsbeispielen näher erläutert.

In den Zeichnungen zeigt:
- Fig.1: eine schematische Darstellung einer Einrichtung zum Orten eines Bohrkopfs einer Erdbohrvorrichtung;
- Fig. 2a, b: Muster für einen Bereich, unter dem sich ein zu ortender Bohrkopf befindet, wie der Bereich überflogen werden kann.

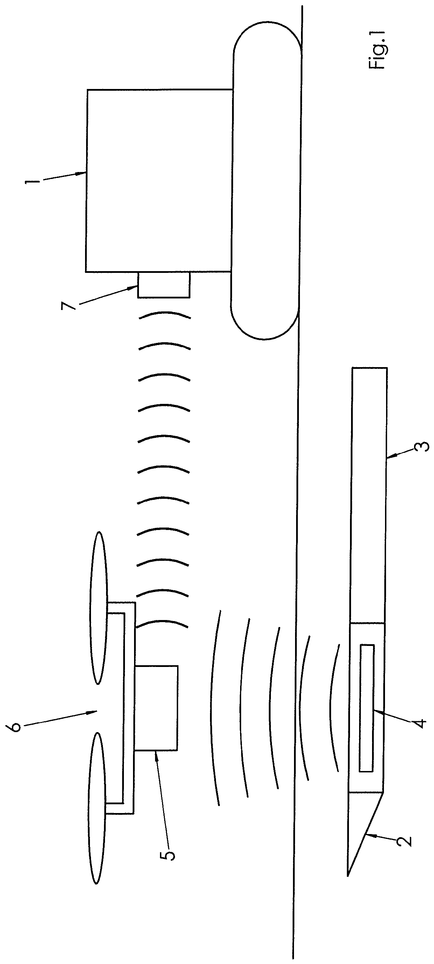

Fig. 1 zeigt eine Erdbohrvorrichtung 1, mit der eine Erdbohrung in das Erdreich eingebracht wird. Die Erdbohrvorrichtung 1 treibt einen Bohrkopf 2 in das Erdreich ein. Der Bohrkopf 2 ist endseitig an einem Bohrstrang 3 angeordnet. Ein Sender 4, der im Bohrkopf 2 oder in einem dem Bohrkopf 2 folgenden Abschnitt des Bohrstrangs 3 angeordnet ist, sendet elektromagnetische Signale. Die elektromagnetischen Signale können von einer Sonde 5 empfangen werden. Mittels der Sonde 5 kann der Sender 4 im Erdreich geortet werden. Über die Ortung des Senders 4 kann der Bohrkopf 2 geortet werden. Die Sonde 5 ist an einem fliegenden Objekt 6 angeordnet. Die Sonde 5 weist neben einem Empfänger für die elektromagnetischen Signale des Senders 4 einen Sender auf, der seinerseits ein Signal aussendet, das von einem Empfänger 7 an der Erdbohrvorrichtung 1 empfangen werden kann. Das Signal, das von der Sonde 5 an den Empfänger 7 gesendet wird, kann einer Position im Raum zugeordnet sein und weist auf den Ort des Senders 4 hin, so dass an der Erdbohrvorrichtung 1 der Ort des Senders 4 bekannt ist. Aus dem ermittelten Ort des Senders 4 kann eine Abweichung von der Soll-Lage der einzubringenden Erdbohrung festgestellt und Maßnahme ergriffen werden, um bei einer Abweichung dieser entgegenzusteuern.

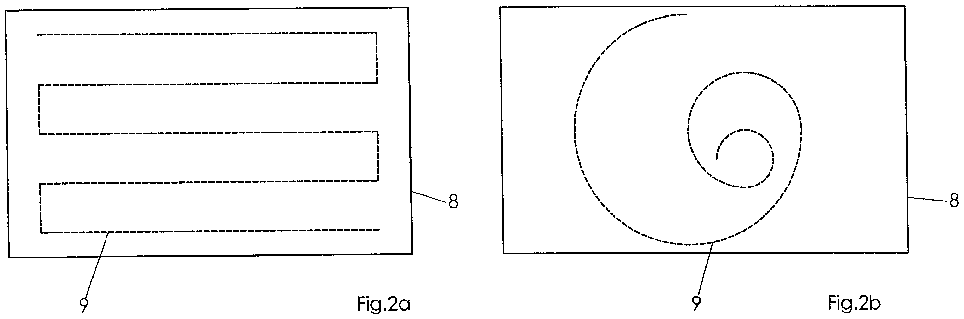

Fig. 2a zeigt schematisch einen im Wesentlichen rechteckförmigen Bereich 8, unter dem ein Bohrkopf 2 mit dem Sender 4 vermutet wird. Das fliegende Objekt 6 kann den Bereich 8 in einem vorgegebenen Muster 9, welches zeilenförmige Bereiche enthält, überfliegen. Das Muster 9 ist in der Fig. 2a gestrichelt dargestellt. Hierdurch kann ein Bereich 8 systematisch überflogen werden, um einen Bohrkopf 2 zu orten. Die Fig. 2b zeigt ebenfalls einen Bereich 8, unter dem ein Bohrkopf 2 vermutet wird, den es zu orten gilt. Der Bereich 8 kann mittels dem fliegenden Objekt 6, an dem die Sonde 5 angeordnet wird, mittels des in Fig. 2b dargestellten spiralförmigen Musters 9 überflogen werden. Wenn der Ort der Sonde 5 ermittelt ist, kann von dem Muster 9 abgewichen werden und die Sonde 5 mittels des fliegenden Objekts 6 auf den Ort des Senders 4 optimiert werden.

## Patentansprüche

1. Einrichtung zum Orten eines Bohrkopfs einer Erdbohrvorrichtung (1), umfassend eine kabellose Sonde (5), wobei die Sonde (5) an oder in einem fliegenden Objekt (6) angeordnet ist, **dadurch gekennzeichnet, dass** die Einrichtung mittels eines Programms angesteuert wird, das in einem Speicher der Einrichtung abgelegt ist, und derart angepasst ist, dass das fliegende Objekt (6) zum Finden des Bohrkopfs in einem vorbestimmten Muster (9) fliegt.

2. Einrichtung nach Anspruch 1, **dadurch gekennzeichnet, dass** ein Bereich (8) an einer Eingabe eingebbar ist, der von dem fliegenden Objekt (6) überfliegbar ist.

3. System umfassend die Einrichtung nach einem der Ansprüche 1 und 2 und einen Bohrkopf (2) oder einen dem Bohrkopf (2) folgenden Abschnitt eines Bohrstrangs (3), wobei der Bohrkopf (2) bzw. Abschnitt eine Aufnahme für einen Sender (4) aufweist.

4. Verfahren zum Orten eines Bohrkopfs (2) einer Erdbohrvorrichtung (1), wobei eine Sonde (5) über das Erdreich geführt wird, die das Erdreich mittels eines fliegenden Objekts (6), in oder an dem die Sonde (5) angeordnet ist, überfliegt, **dadurch gekennzeichnet, dass** das Erdreich zum Finden des Bohrkopfs in einem vorbestimmten Muster (9) überflogen wird.

5. Verfahren nach Anspruch 4, **dadurch gekennzeichnet, dass** ein Bereich (8) eingegeben wird, der von dem fliegenden Objekt (6) überflogen wird.

6. Verwendung beim Orten eines Bohrkopfs (2) einer Erdbohrvorrichtung (1), bei der eine kabellose Sonde (5) zum Orten des Bohrkopfs (2) verwendet wird, und ein fliegendes Objekt (6) verwendet wird, in oder an dem die Sonde (5) angeordnet ist, **dadurch gekennzeichnet, dass** ein vorbestimmtes Muster (9) zum Finden des Bohrkopfs verwendet wird, mit dem das Objekt (6) das Erdreich überfliegt.

## Claims

1. Device for locating a drill head of ground drilling equipment (1), comprising a wireless probe (5), wherein the probe (5) is arranged on or in a flying object (6), **characterized in that** the device is controlled by means of a program, which is stored in a memory of the device and is adapted in such a manner that the flying object (6) flies in a predetermined pattern (9) to find the drill head.

2. Device according to claim 1, **characterized in that** a region (8) which can be flown over by the flying object (6) can be entered at an input device.

3. System comprising the device in accordance with one of the claims 1 and 2 and a drill head (2) or a section of a drill string (3) following the drill head (2), wherein the drill head (2) or the section has a holder for a transmitter (4).

4. Method for locating a drill head (2) of ground drilling equipment (1), wherein a probe (5) is guided over the earth, which probe flies over the earth by means of a flying object (6), in or on which the probe (5) is arranged, **characterized in that** the earth is flown over in a predetermined pattern (9) to find the drill head.

5. Method according to claim 4, **characterized in that** a region (8) to be flown over by the flying object (6) is input.

6. Use in locating a drill head (2) of ground drilling equipment (1), wherein a wireless probe (5) is used to locate the drill head (2) and a flying object (6), in or on which the probe (5) is arranged, is used, **characterized in that** a predetermined pattern (9) for finding the drill head is used, following which pattern the object (6) flies over the earth.

## Revendications

1. Dispositif pour localiser une tête de forage d'un appareil de forage du sol (1), comprenant une sonde sans fil (5), la sonde (5) étant disposée sur ou dans un objet volant (6), **caractérisé en ce que** le dispositif est commandé au moyen d'un programme, qui est stocké dans une mémoire du dispositif, et est adapté de telle sorte que l'objet volant (6) vole selon un modèle prédéterminé (9) pour trouver la tête de forage.

2. Dispositif selon la revendication 1, **caractérisé en ce qu'**une zone (8) peut être saisie sur une entrée, laquelle zone peut être survolée par l'objet volant (6).

3. Système comprenant le dispositif selon l'une des revendications 1 et 2 et une tête de forage (2) ou une section d'un train de tiges de forage (3) suivant la tête de forage (2), la tête de forage (2) ou la section présentant un logement pour un émetteur (4).

4. Procédé pour localiser une tête de forage (2) d'un appareil de forage du sol (1), dans lequel une sonde (5) est guidée au-dessus du sol, qui survole le sol au moyen d'un objet volant (6) dans ou sur lequel la sonde (5) est disposée, **caractérisé en ce que** le sol est survolé selon un modèle prédéterminé (9) pour trouver la tête de forage.

5. Procédé selon la revendication 4, **caractérisé en ce qu'**une zone (8) est saisie qui est survolée par l'objet volant (6).

6. Utilisation dans la localisation d'une tête de forage (2) d'un appareil de forage du sol (1), dans laquelle une sonde sans fil (5) est utilisée pour localiser la tête de forage (2), et un objet volant (6) est utilisé dans ou sur lequel la sonde (5) est disposée, **caractérisée en ce qu'un** modèle prédéterminé (9) est utilisé pour trouver la tête de forage, avec lequel l'objet (6) survole le sol.
